# EUROPEAN PATENT SPECIFICATION

(11) **EP 1 222 824 B1**
(45) Date of publication and mention of the grant of the patent: **16.07.2003**
(21) Application number: 00971352.0
(22) Date of filing: 06.10.2000
(51) Int. Cl.: H04N 9/877

(54) **METHOD AND DEVICE FOR WRITING DATA TO A RECORDING MEDIUM IN A DIGITAL VIDEO SYSTEM**
VERFAHREN UND ANLAGE ZUM SCHREIBEN VON DATEN AUF EIN AUFNAHMEMEDIUM IN EINEM DIGITALEN VIDEOSYSTEM
PROCEDE ET DISPOSITIF D'ECRITURE DE DONNEES SUR UN SUPPORT D'ENREGISTREMENT, DANS UN SYSTEME VIDEO NUMERIQUE

(30) Priority: 07.10.1999 FR 9912481
(43) Date of publication of application: 17.07.2002
(73) Proprietor: Thomson Licensing S.A., 92100 Boulogne-Billancourt (FR)
(72) Inventor: RABU, Christophe, c/o THOMSON multimedia, 92648 Boulogne Cedex (FR); MAETZ, Pascal, c/o THOMSON multimedia, 92648 Boulogne Cedex (FR); DESCHAMPS, Fabien, c/o THOMSON multimedia, 92648 Boulogne Cedex (FR); ABELARD, Franck, c/o THOMSON multimedia, 92648 Boulogne Cedex (FR)
(74) Representative: Berthier, Karine
(86) International application number: EP0009922
(87) International publication number: WO01026385

(56) References cited:
- EP-A- 0 762 756
- EP-A- 0 841 819

## Description

The invention concerns a method and device for writing data, such as compressed video, audio and auxiliary data, to a recording medium and in particular for managing the write buffers of the device.
An MPEG II or DVB compliant digital television stream comprises several layers, among which the elementary stream layer, the Packetized Elementary Stream (PES) layer and the Transport Stream (TS) layer. A corresponding decoder usually comprises a demultiplexer for filtering certain TS layer packets, a PES Parser for removing the PES layer and transferring the original elementary streams and at least a video decoder for decoding the video elementary stream.
Future decoders will incorporate mass storage devices in order to record compressed TS or PES streams. The French patent applications 2787962 and 2787963 filed on December 28, 1998 in the name of THOMSON multimedia describe a digital video receiver integrating a hard disk for recording compressed A/V streams. The receiver comprises buffers for accumulating audio, video and auxiliary data, where the writing of all accumulated data to a fixed-size block of the disk is triggered when the amount of video data reaches a predetermined level. Although this system has many advantages, disk space is not used with maximum efficiency, because it is necessary to fill unused space of a data block attributed to either audio or auxiliary data on the disk with stuffing bits.

EP-A-0 841 819 discloses that video and audio information is temporarily stored in respective video and audio buffers. Time information, which is generated from the video blockrate information, is used to read out a predetermined quantity of video and audio information from the respective buffers. The read out information is subsequently stored in a hard disc.

An object of the invention is a method for recording data in a digital video processing device connectable to a recording medium, characterized in that it comprises the steps of:
- receiving a stream of data packets, **each data packet being associated to one of N packet identifiers (PID);**
- providing N (N>1) buffers for receiving respectively data packets corresponding to one of N **packet identifiers PIDs;**
- monitoring the total of quantity of data stored in the N buffers; and
- triggering a writing process of the data contained in the buffers to the recording medium when said total quantity of data reaches a predetermined level.

As the sum of the quantities of data in the different buffers triggers the writing process, the predetermined total quantity of data is always fully used by useful data. No stuffing bits are necessary when writing the data to the recording medium.

According to an embodiment of the invention, the predetermined level corresponds to the size of a data recording unit on the recording medium, minus the quantity of space reserved to service information.

Typically, the service information includes a header for the concatenated data from the buffers.

According to an embodiment of the invention, the writing step comprises the writing of the data in the different buffers to a same recording unit.

As will be described in the detailed description, a recording unit on the recording medium has a size adapted to the kind of data which is to be recorded (i.e. an audio/video stream). According to the example below, this size is of 128 Kbytes, but it may be greater.

According to an embodiment of the invention, the method further comprises the step of writing a header into said recording unit, said header indicating for the data from each buffer: the corresponding **packet identifier,** the size and location of the data in the recording unit.

Another object of the invention is a digital video processing device comprising a demultiplexer and a recording medium, characterized in that it further comprises:
- N buffers, where N is an integer greater than one,
- means for controlling the writing of demultiplexed data packets, **each data packet being associated to one of N packet identifiers,** into said buffers, where each buffer receives data packets corresponding to a specific **packet identifier,** and for controlling the quantity of data packets in each buffer in order to trigger the writing of the buffer contents to the recording medium when the sum of data packets in all buffers reaches a predetermined level.

Other characteristics and advantages of the invention will appear through the description of particular non-limiting embodiments of the invention, illustrated by the drawings among which:
- figure 1 is a block diagram of a television receiver according to the present embodiment,
- figure 2 is a diagram of the file system of a hard disk drive used as a mass storage medium according to the present embodiment,
- figure 3 is a diagram of the part of the file system dedicated to the recording and reproduction of audio/video streams,
- figure 4a is a diagram of an elementary storage unit ('SEU') used to store stream data, in PES mode, while figure 4b is a diagram of a SEU used to store stream data in Transport Stream mode,
- figures 5a and 5b are diagrams of the FIFOs used to store PES data to be written to the hard disk drive when in PES mode.

The present description is made in the frame of a system accepting an MPEG II compliant data stream and uses the corresponding vocabulary. More information concerning the MPEG II standard syntax for video and transport level coding can be found for instance in the documents: ISO/IEC 13818-1 (Information Technology - Generic coding of moving pictures and associated audio information: Systems) and ISO/IEC 13818 - 2 (Information Technology - Generic coding of moving pictures and associated audio information: Video). The present system also complies with the DVB ETR-154 standard.

The invention is of course not limited to the MPEG II environment, or to the data layers described in the present patent application.

### 1. System overview

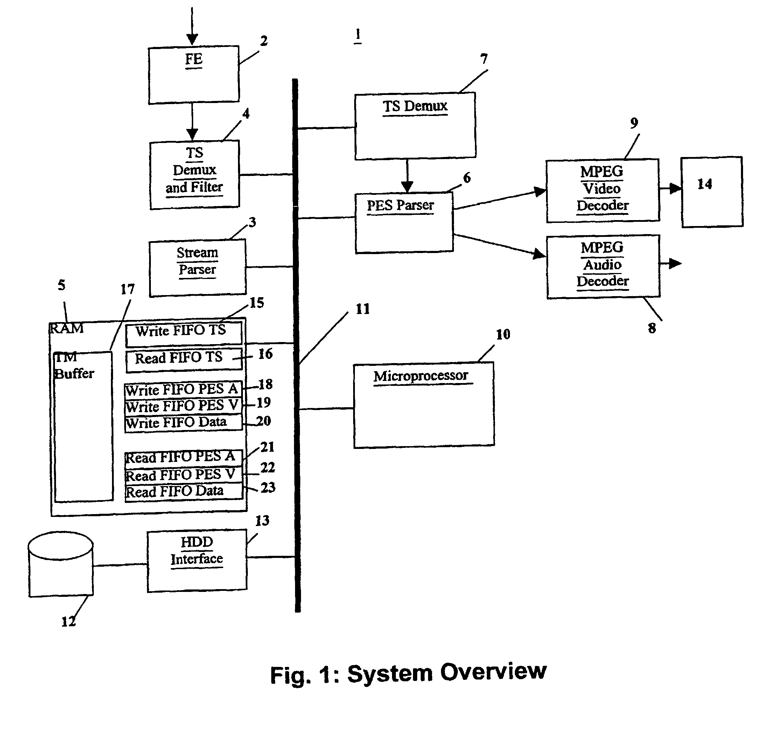

To achieve high quality trickmode management when playing back a video stream from a local mass storage device, the knowledge of the structure of the recorded video stream is required. This structure will be called trickmode information in what follows. It results from a parsing process carried out before and during the recording of the video stream. Parsing consists in analyzing the stream structure and in memorizing the nature of certain syntactical structures. Information relating to the structures, as well as their position on the mass storage medium, is also recorded.
According to the present embodiment, data such as but not limited to video is recorded at the transport stream layer or the packetized elementary stream layer. Trickmode information describes the structure of the stored video stream at a number of layers (Transport Stream (TS) - Packetized Elementary Stream (PES) - Elementary Stream (ES) according to the well-known MPEG II syntax), down to the compressed video information.
The main embodiment, carrying out recording at the TS layer level, will be described first. Differences with the second embodiment, which records at the PES layer level, will be indicated in each case. Both embodiments being compatible in the sense that both recording levels can cohabit in a same decoder, they will both be described in reference to figure 1.

### (a) TS layer recording

Figure 1 is a block diagram of a digital television receiver according to the present embodiment. The receiver 1 comprises front-end circuitry 2 which can output a transport stream to a transport stream demultiplexer and filter 4. The front-end circuitry typically includes a tuner, an analog/digital converter, an appropriate demodulator and forward error correction circuits. It receives a signal from a signal source (not shown), which is typically a cable, a satellite dish and associated low-noise block and down-converter, or a terrestrial antenna. Global resources in the system comprise a RAM 5, a PES Parser 6, a second Transport Stream demultiplexer 7 , audio and video decoders 8 and 9 and a microprocessor 10. The TS filter and demultiplexer 4 is programmed by the microprocessor to filter and extract from incoming transport stream data packets corresponding to certain criteria, typically data packets having certain Packet Identifier (PID) values. Incoming stream content, in particular PID assignment, is known for example from a certain number of transmitted data tables defined by the MPEG II standard or the DVB Service Information standard (Document reference ETSI EN 300 468). Private PID values may also be defined.

Filtered transport stream data packets are buffered in memory 5, a part of which is arranged as a TS Write FIFO 15, for further processing by Stream Parser 3.
Contrary to a conventional demultiplexer, which dispatches the different TS packets to separate buffers according to their PID value and thus their destination application (e.g. the audio and video decoders), the TS filter and demultiplexer 4 writes all packets corresponding to PIDs of streams to be recorded to a single buffer (i.e. TS Write FIFO 15 in the present embodiment), in the order of packet reception.
Compressed stream data and other data (e.g. control data) are transmitted between peripheral blocks through data paths modelised by the bus 11. The receiver further comprises a mass storage device 12, which according to the present embodiment is a hard disk drive. Mass storage device 12 is connected to bus 11 through an interface 13, in the present case an EIDE interface. The video decoder circuit 9 is connected in a known fashion to video processing and display circuitry 14.
Memory 5 contains the following areas:
- the already mentioned write FIFO 15 for storing filtered TS packet data to be written to the hard disk,
- a TS read FIFO 16 for storing TS packets data read from the hard disk,
- a trickmode buffer area 17 to store trickmode information to be written to, (or read from,) the hard disk.

### (b) PES layer recording

For the purpose of PES layer recording, the memory 5 contains three write FIFOs referenced 18 to 20, respectively dedicated to Audio PES, Video PES and other data, and three read FIFOs referenced 21 to 23, also respectively dedicated to similar types of packets.
When the decoder functions in PES mode, the second demultiplexer 7 is not used, the PES packets being transferred directly from the hard disk 12 to the PES parser 6 through FIFOs 21 and 22.

The FIFOs 15, 16 and 18 to 23 are preferably organized in a circular manner.

### 2. Mass storage device

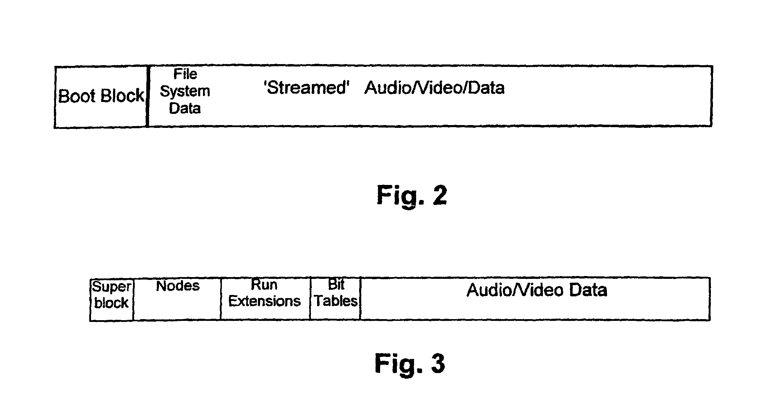

The hard disk drive file system will now be described. The disk drive 12 possesses a file system shown by the diagram of figure 2, the file system being dedicated to audio/video stream recording and reproduction. The file system responds to the specific requirements of the type of data which it manages. The present file system is optimized for sequential access of isochronous data streams, with blocks of relatively large size.

As a variant, a second file system (not illustrated) dedicated to the recording and retrieval of other data than streamed data may be present on the same hard disk. This second file system is optimized for random access to more conventional computer-type files. The boot block can be common to both file systems. This second file system is of a conventional type, such as a UNIX or MINIX file system, and will not be described in more detail.

Figure 3 takes a more detailed look at the stream file system. This file system comprises a superblock, a node storage area, a run extension storage area, an audio/video data storage area and a bit table area, which holds three bit tables describing the state of each elementary storage structure in each of the three storage areas.
The boot block comprises general information concerning the hard disk drive, such as volume name and volume identifier, BIOS parameters and a boot program.
The superblock contains information concerning the stream file system, in particular the addresses (under the form of logical block addresses - 'LBAs') and sizes of the different areas of the file system.
The node storage area is used to store nodes. A node is a data structure describing a file stored in the audio/video data storage area. It may also describe a directory. It contains such information as the file name, parent directory information and a description of the parts of the audio/video data storage area where the file is located. This information is given under the form of LBA runs, defined by an LBA starting address and a number of LBA blocks forming the run. Since a limited number of runs may be stored in a given node, a pointer within the node may point to a run extension data structure located in the corresponding storage area. File location information is replaced by file or directory identifiers if the node is used to describe a directory. The first node describes the root directory.
The run extension storage area contains particular data structures identifying further LBA runs for a given file.
The bit table area contains three bit tables: the node bit table, the run extension bit table and the Storage Elementary Unit bit table. The first two tables respectively indicate the free or used state of each node, respectively run extension. The third table does the same for each elementary storage unit, which according to the present embodiment, represents a block of 128 Kbytes (of course, blocks of a different size and especially of larger size may be used, the 128 K value being given only as an example).
Finally, the audio/video data storage area comprises a series of elementary storage units ('SEU'). Each SEU comprises 256 sectors, thus representing 128 Kbytes.

Using the above data structures, the microprocessor 10 can create and delete files as well as write data to and read data from these files.

### (a) For TS layer recording:

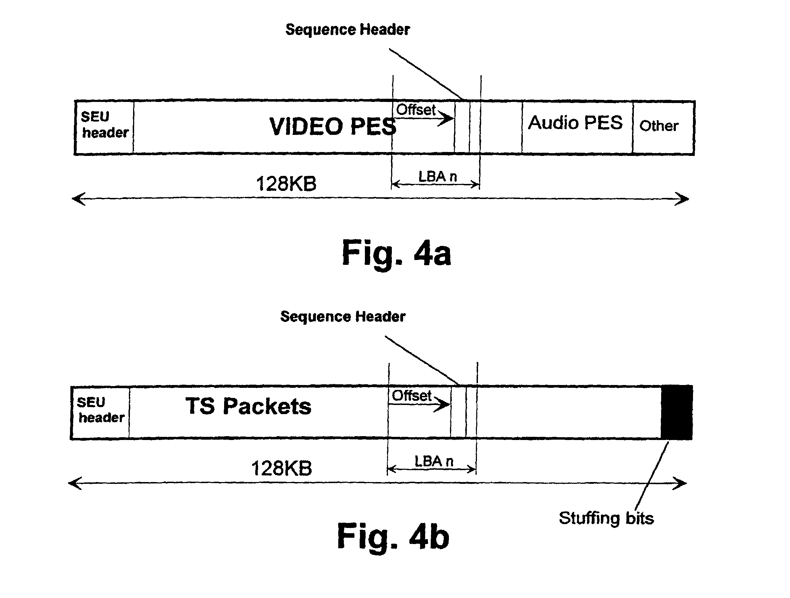

Figure 4b is a diagram of a SEU when it is used for TS layer recording.
The SEU comprises a short header and a payload made of a number of multiplexed whole TS packets. Since the SEU size is a multiple of 512 bytes since it contains an integer number of TS packets, a certain number of stuffing bits have to be added to the payload.

### (b) For PES layer recording:

Figure 4a illustrates the contents of a PES stream SEU. The SEU comprises a header and, according to the present embodiment, up to three areas of varying size, respectively dedicated to video PES packets, audio PES packets and other PES packets.
The number of areas is not limited to three, although this is a realistic example. Several video elementary streams, audio elementary streams and auxiliary data streams may lead to a corresponding number of areas within a SEU. In this case, the memory 5 will contain a corresponding number of read/write FIFOs. Space reserved for each buffer may depend on the type of data which it is supposed to hold, i.e. a buffer associated with an elementary video stream will be much larger than a buffer associated with an audio stream. The MPEG PMT table sent with the TS stream describes the nature of the payloads corresponding to the different PIDs.

### 3. Recording process

### (a) TS layer recording:

The constitution of a SEU for TS layer recording and reproduction can best be explained by describing how filtered TS packets are handled by the different elements of the receiver. Once the demultiplexer has selected the packets corresponding to the programmed PID values, it stores them in the circular write FIFO 15 in memory 5. The type of content of a packet, i.e. video (V), audio (A) or other (O), is determined by the microprocessor 10 from the respective PID values in the packet headers. The content of video (V) transport stream packets processed by the demultiplexer is parsed, i.e. analyzed by the Stream Parser 6, for extraction of certain types of trickmode information described in more detail later. In principle, no such analysis is performed for audio or other data packets. The initial order of the TS packets in the stream is maintained in the FIFO 15. This way, the continuity counter values in the different packets remain coherent. Moreover, the synchronization between the different streams (in particular the video and audio streams corresponding to a same event) is maintained. Microprocessor 10 manages a read and a write pointer for the write FIFO 15. When the difference between the write and read pointers reaches the equivalent of 128 Kbytes minus the size of a SEU header, the microprocessor launches a write process to the hard disk.
For TS recording, each SEU header contains an indication of the length of useful data in the TS packet payload, in order to distinguish between TS packets and stuffing bits.

### (b) PES layer recording:

In this case, the demultiplexer and filter 4 does not only filter TS packets: it also strips the TS layer away, before writing the TS payload, i.e. the PES packets, into RAM 5. PES packets are transferred to one of the circular write FIFOs 18 to 20 depending on the value of the PID of the TS packet in which they were transported. Microprocessor 10 manages read and write pointers for each of these FIFOs. When the sum of all the differences between the write and read pointers for all buffers reaches the equivalent of 128 Kbytes minus the size of a SEU header, the microprocessor launches a write process to the hard disk. Video PES are parsed by Stream Parser 3 for trick mode information.
For PES recording, the header contains an information of the quantity of data of each type which is going to be written to the SEU, i.e. the size of each area associated with a specific PID, and the offset address of each area within the SEU. No stuffing bits are used in case of PES recording: PES packets may begin in one SEU and end in the following SEU.

The write process, be it for TS or PES recording, is started by the microprocessor 10, by sending an appropriate command to the EIDE interface, specifying the LBA address where the writing should start and the number of LBAs to be written. Once the hard disk drive is ready to carry out the writing process, the EIDE interface informs the microprocessor by an appropriate interrupt.
The write process continues by writing the SEU header content, generated by the microprocessor 10, to the HDD interface. The write process further continues by initiating DMA processes to the HDD interface 13 either from TS Write FIFO 15 (for TS recording) or in turn for each of the write FIFOs 18 to 20 (for PES recording). In a known fashion, HDD interface 13 comprises a cache memory acting as buffer for disk accesses.

It is of course supposed here that the proper file has been opened by the microprocessor and that the microprocessor has also indicated the destination SEU for the transferred data to the EIDE interface.

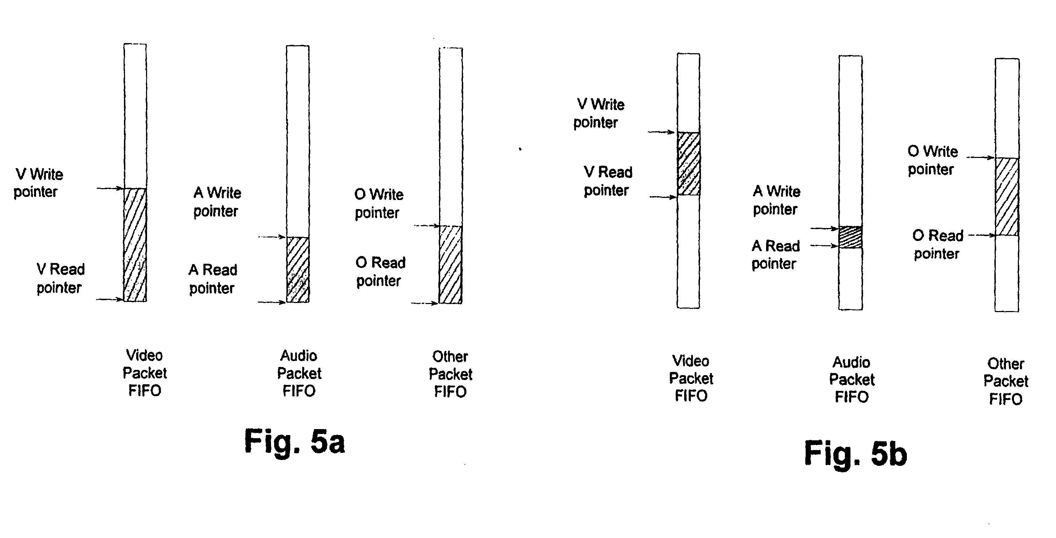

While this hard disk write process is taking place, packets (whether TS or PES) continue to be written to the FIFOs.
For PES recording, if figure 5a illustrates the FIFO and read and write pointer states just before transfer to the disk begins, then figure 5b represents the state once the transfer is achieved. When the pointers reach the top addresses of the FIFOs, they wrap around to the bottom addresses. Although the FIFOs all have the same apparent size in figures 5a and 5b, different sizes may be used. A similar process applies for TS recording.

The present embodiment concerns mostly TS stream packet recording and reproduction, but of course the recording/reproduction of other layers, in particular the PES layer, is not outside of the scope of the invention.
Moreover, although according to the present embodiment, the microprocessor 6 manages the file systems of the hard disk drive, this task may also be performed by another processor in the receiver, in particular the video decoder 10.
Also, although the mass storage device used in the present embodiment is a hard disk drive, another type of device could also be used. For example, recordable Compact Discs or Digital Video Discs may be employed.

## Claims

1. Method for recording data in a digital video processing device connectable to a recording medium, **characterized in that** it comprises the steps of:
- receiving a stream of data packets each data packet being associated to one of N packet identifiers (PID);
- providing N (N>1) buffers for receiving respectively data packets corresponding to one of N packet identifiers;
- monitoring the total of quantity of data stored in the N buffers; and
- triggering a writing process of the data contained in the buffers to the recording medium when said total quantity of data reaches a predetermined level.

2. Method according to claim 1, wherein the predetermined level corresponds to the size of a data recording unit on the recording medium, minus the quantity of space reserved to service information.

3. Method according to claim 2, wherein the writing step comprises the writing of the data in the different buffers to a same recording unit.

4. Method according to claim 3, further comprising the step of writing a header into said recording unit, said header indicating for the data from each buffer: the corresponding packet identifier, the size and location of the data in the recording unit.

5. Digital video processing device comprising a demultiplexer (4) and a recording medium (12), **characterized in that** it further comprises:
- N buffers, where N is an integer greater than one,
- means (10) for controlling the writing of demultiplexed data packets, each data packet being associated to one of N packet identifiers, into said buffers, where each buffer receives data packets corresponding to a specific packet identifier, and for controlling the quantity of data packets in each buffer in order to trigger the writing of the buffer contents to the recording medium when the sum of data packets in all buffers reaches a predetermined level.

6. Device according to claim 5, wherein the predetermined level corresponds to the size of a data recording unit on the recording medium.

## Patentansprüche

1. Verfahren zur Aufzeichnung von Daten in einem digitalen Videoverarbeitungsgerät, das an einen Aufzeichnungsträger anschließbar ist, **gekennzeichnet durch** folgende Schritte:
- Empfang eines Stroms von Datenpaketen, wobei jedes Datenpaket zu einem von N Paketidentifizierern (PID) gehört,
- Bereitstellung von N (N>1) Puffern zum Empfang jeweiliger Datenpakete entsprechend einem der N Paketidentifizierer,
- Überwachung der Gesamtmenge von in den N Puffern gespeicherten Daten und
- Auslösung eines Schreibvorgangs von in den Puffern enthaltenen Daten zu dem Aufzeichnungsträger, wenn die Gesamtmenge der Daten einen vorbestimmten Wert erreicht.

2. Verfahren nach Anspruch 1, wobei der vorbestimmte Wert der Größe einer Datenaufzeichnungseinheit auf dem Aufzeichnungsträger, abzüglich der Menge des für Serviceinformationen reservierten Raums, entspricht.

3. Verfahren nach Anspruch 2, wobei der Schreibschritt das Schreiben der Daten in die verschiedenen Puffer zu derselben Aufzeichnungseinheit enthält.

4. Verfahren nach Anspruch 3 mit dem zusätzlichen Schritt des Schreibens eines Headers in die Aufzeichnungseinheit, wobei der Header für die Daten von jedem Puffer Folgendes anzeigt: den entsprechenden Paketidentifizierer, die Größe und die Lage der Daten in der Aufzeichnungseinheit.

5. Digitales Videoverarbeitungsgerät mit einem Demultiplexer (4) und einem Aufzeichnungsträger (12) **gekennzeichnet durch**:
- N Puffer, wobei N eine ganze Zahl größer als eins ist,
- Mittel (10) zur Steuerung des Schreibens von demultiplexierten Datenpaketen in die Puffer, wobei jedes Datenpaket zu einem von N Paketidentifizierern gehört, wo jeder Puffer einem spezifischen Paketidentifizierer entsprechende Datenpakete empfängt, und zur Steuerung der Menge von Datenpaketen in jedem Puffer, um das Schreiben des Pufferinhalts auf den Aufzeichnungsträger auszulösen, wenn die Summe der Datenpakete in allen Puffern einen vorbestimmten Wert erreicht.

6. Gerät nach Anspruch 5, wobei der vorbestimmte Wert der Größe einer Datenaufzeichnungseinheit auf dem Aufzeichnungsträger entspricht.

## Revendications

1. Procédé pour enregistrer des données dans un dispositif de traitement vidéo numérique pouvant être connecté à un support d'enregistrement, **caractérisé en ce qu'**il comprend les étapes de :
- réception d'un train de paquets de données, chaque paquet de données étant associé à l'un de N identifiants de paquets (PID) ;
- fourniture de N (N > 1) tampons pour recevoir des paquets de données respectifs correspondant à l'un de N identifiants de paquets ;
- contrôle du total de la quantité de données mémorisées dans les N tampons ; et
- déclenchement d'un processus d'écriture des données contenues dans les tampons sur le support d'enregistrement quand ladite quantité totale de données atteint un niveau prédéterminé.

2. Procédé selon la revendication 1, dans lequel le niveau prédéterminé correspond à la taille d'une unité d'enregistrement de données sur le support d'enregistrement, moins la quantité d'espace réservée aux informations de service.

3. Procédé selon la revendication 2, dans lequel l'étape d'écriture comprend l'écriture des données situées dans les différents tampons sur une même unité d'enregistrement.

4. Procédé selon la revendication 3, comprenant en outre l'étape d'écriture d'un en-tête dans ladite unité d'enregistrement, ledit en-tête indiquant pour les données provenant de chaque tampon : l'identifiant de paquet correspondant, la taille et l'emplacement des données dans l'unité d'enregistrement.

5. Dispositif de traitement vidéo numérique comprenant un démultiplexeur (4) et un support d'enregistrement (12), **caractérisé en ce qu'**il comprend en outre :
- N tampons, où N est un nombre entier supérieur à un,
- un moyen (10) pour commander l'écriture de paquets de données démultiplexés, chaque paquet de données étant associé à l'un de N identifiants de paquets, dans lesdits tampons, où chaque tampon reçoit des paquets de données correspondant à un identifiant de paquet spécifique, et pour commander la quancité de paquets de données dans chaque tampon afin de déclencher l'écriture du contenu du tampon sur le support d'enregistrement quand la somme des paquets de données dans tous les tampons atteint un niveau prédéterminé.

6. Procédé selon la revendication 5, dans lequel le niveau prédéterminé correspond à la taille d'une unité d'enregistrement de données sur le support d'enregistrement.
